# EUROPEAN PATENT APPLICATION

(11) **EP 1 679 016 A2**
(43) Date of publication of application: **12.07.2006**
(21) Application number: 06000104.7
(22) Date of filing: 04.01.2006
(51) Int. Cl.: A45C 13/00

(54) **Waterproof bag**

(30) Priority: 05.01.2005 GB 0500070
(71) Applicant: Zyro Limited, Roecliffe York YO51 9LS (GB)
(72) Inventor: Ellison, Simon, THIRSK YO7 3BX (GB)
(74) Representative: Harrison Goddard Foote

(57) **Abstract**

The invention relates to waterproof bags, methods of manufacturing and uses thereof. The water proof bag comprises an outer casing (6) and an inner pouch (5) wherein the casing and pouch are interconnected by a bridging element (1)

## Description

### Field of the invention

The invention relates to waterproof bags, methods of manufacture and uses thereof.

### Background to the invention

Waterproof bags which are used during outdoor pursuits, such as cycling, walking, fell running are often used in inclement weather and are required to be waterproof in order to protect the contents of the waterproof bag.

In an attempt to reduce or prevent water damage to the contents of the bag, a number of waterproof bags have been designed which have an outer and inner bag manufactured from a waterproof material. In such instances water has to breach two layers of waterproof material before reaching the contents of the inner bag.

An example of such a waterproof bag is disclosed in US 6,112,959 where an inner pouch manufactured from a flexible waterproof material is detachably attached to an outer bag by a pair of snap fasteners. A problem associated with this design of bag is that the snap fasteners will only be able to support a limited amount of weight, anything above this and the likelihood exists that the inner bag will become detached from the outer bag and moved about independently, with possible damage to the contents of the bag as a result of this movement.

EP0189539 has attempted to overcome this problem by providing an inner pouch that is attached to an outer casing by a finishing seam. Whilst this prevents the inner pouch moving around within the outer casing, if this seam becomes at all compromised then water will easily seep through the seam and into the inner pouch resulting in water damage to its contents.

An object of the invention is to provide a waterproof bag in which the inner bag and outer bag are connected but where this connection does not compromise the waterproof characteristics of the bag.

An object if the invention is to provide a means of directing water away from the inner bag.

### Statements of the invention.

According to the invention there is provided a waterproof bag comprising an outer casing and an inner pouch, wherein the casing and pouch are interconnected by a bridging element.

Preferably, the casing and/or the pouch are provided with a closeable top. The closing means may, for example, be a flap, zip, or drawstring. The type of closing means provided on the casing and pouch may be the same or different. For example, a flap may be used to close the casing whilst a drawstring may be used to close the pouch.

The casing and pouch may be of various shapes, for example, substantially cylindrical, substantially square or substantially rectangular. The shape of the pouch does not have to be correspond exactly to the shape of the casing.

Preferably the casing and/or pouch are provided with a base region. This base region may be reinforced, particularly on the casing, and may provide a stable surface on which the bag can stand. The base region may provided as an extension of a side wall.

The bridging element functions to retain the pouch in a physical relationship with the casing whilst also reducing the likelihood of any water entering the inner layer and damaging its contents.

Preferably the bridging element extends around at least a portion of the inner circumference of the casing and a corresponding portion of the outer circumference of the pouch. More preferably, the bridging element extends around at least half of the inner circumference of the casing and corresponding portion of the outer circumference of the pouch. Even more preferably still the bridging element extends completely around the inner circumference of the casing and corresponding portion of the outer circumference of the pouch. The circumferential positioning of the bridging element prevents water seeping between the layers and accumulating within the base region of the outer layer.

More preferably still the bridging element is a substantially flat, elongate strip of material, even more preferably this is a flexible material. The flexibility of the bridging element permits a degree of movement of the casing and pouch relative to each other whilst still maintaining the connection.

In a further preferred embodiment of the invention the bridging element is attached to the side wall of at least the casing or pouch by means of a stitched seam. Preferably the bridging element is attached to both the casing and pouch by a stitched seam.

More preferably still the stitched seam is overlain with waterproof strip in order to provide a secondary barrier to any water that seeps through the stitching. Even more preferably this waterproof strip is a waterproof tape which has an adhesive side that adheres to the stitched seam.

In an alternative embodiment of the invention, the bridging element is attached by a welded seam. This attachment method is possible if both of the materials to be attached to each other are suitable for thermal welding or thermal bonding. For example, the materials must have suitable physical characteristics, such as melting points, which enable them to form a bond when heated to a required temperature. The thermal welding may be ultrasonic welding.

In other alternative embodiments of the invention, the bridging element is attached to the casing and/or the inner pouch by other means which would be known to those skilled in the art, such by an adhesive.

In a further alternative embodiment of the invention, the bridging element is integral with and manufactured as part of at least the casing or the pouch. This reduces the number of attachment seams which are required to connect the bridging element and therefore reduces the likelihood of a seam being breached by water.

In a further preferred embodiment of the invention, the bridging element is not directly attached to the pouch but is attached to a panel that extends around the circumference of the pouch. This panel is preferably attached to the pouch by a stitched seam about the panel's perimeter. In this embodiment of the invention even if water breaches the seam that attaches the bridging element to the panel, the water will collect behind the panel and not enter the pouch.

In the embodiments of the invention described above, preferably the casing, pouch and bridging element are manufactured from a waterproof material. Preferably this waterproof material is selected from the group consisting of; nylon, neoprene, poly(vinylchloride) (PVC) or polyester. In alternative embodiments of the invention, the material is coated with a waterproof coating.

The waterproof bag of the invention may be a pannier bag for use on a bicycle, a rucksack, a briefcase, a case for a laptop computer or any other type of bag in which waterproof properties is a desirable feature.

According to a further aspect of the invention there is provided a method of manufacturing a waterproof bag comprising the step of interconnecting an outer casing to an inner pouch using a bridging element.

Preferably the bridging element is an elongate member. Even more preferably still the bridging element is manufactured of a flexible fabric.

Preferably the method comprises the steps of;
i) attaching a portion of the bridging element to the pouch, and
ii) attaching an opposing portion of the bridging element to the casing.

The sequence of attachment of the bridging element can be varied, such that the bridging element is attached sequentially to the pouch and then the casing or alternatively to the casing and then the pouch. In a further alternative embodiment of the invention the bridging element may be attached simultaneously to the casing and pouch.

Preferably the bridging element extends around at least a portion of the inner circumference of the casing and corresponding portion of the outer circumference of the pouch. Even more preferably, the bridging element extends around at least a half of the inner circumference of the casing and corresponding portion of the outer circumference of the pouch. Even more preferably still the bridging element extends completely around the inner circumference of the casing and corresponding portion of the outer circumference of the pouch.

In a preferred embodiment of the method of the invention the bridging element is attached to the pouch and casing by a stitched seam.

In an alternative embodiment of the method of the invention the bridging element is attached to the pouch and casing by a welded seam.

### Brief Description of the Drawings

Fig 1: is a schematic representation of the first step in the assembly of a waterproof pannier bag according to the invention.
Fig 2: is a schematic representation of the second step in the assembly of a waterproof pannier bag according to the invention.
Fig 3: is a schematic representation of the third step in the assembly of a waterproof pannier bag according to the invention.
Figure 4: is a schematic representation of the waterproof pannier bag according to the invention.

### Detailed Description of the invention

The invention will now be described by way of example only and with reference to the accompanying drawings in which;

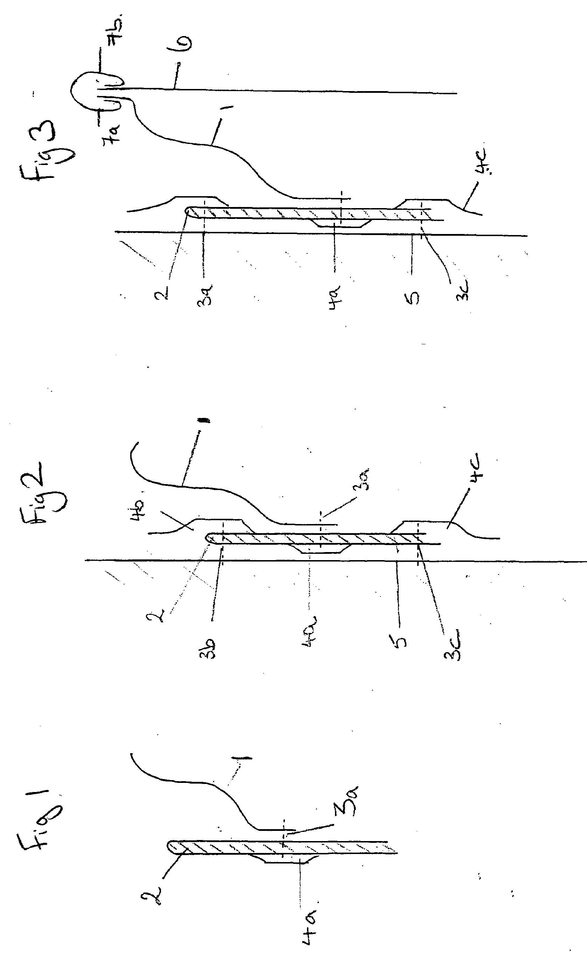

Fig 1: In the first step of the assembly process a bridging element 1, which is a flat elongate double-layered strip of flexible waterproof material, for example a polyester coated with polyurethane, is sewn to the bridge element mounting panel 2, which is also a flat, elongate strip of flexible waterproof material, for example a polyester coated with polyurethane. Prior to sewing, the bridging element mounting panel 2 is positioned so that one of its longitudinal edges forms the lower edge of the panel. A longitudinal edge of the bridging element 1 is then stitched to the bridging element mounting panel 2 such that the bridging element 1 is attached in a horizontal direction along the centre line of the bridging element mounting panel 2. The structure formed is substantially T-shaped. The stitch line is illustrated as 3a. A section of waterproof tape 4a is placed over the stitch line where it is exposed on the side of the panel to which the bridging element 1 is not attached.

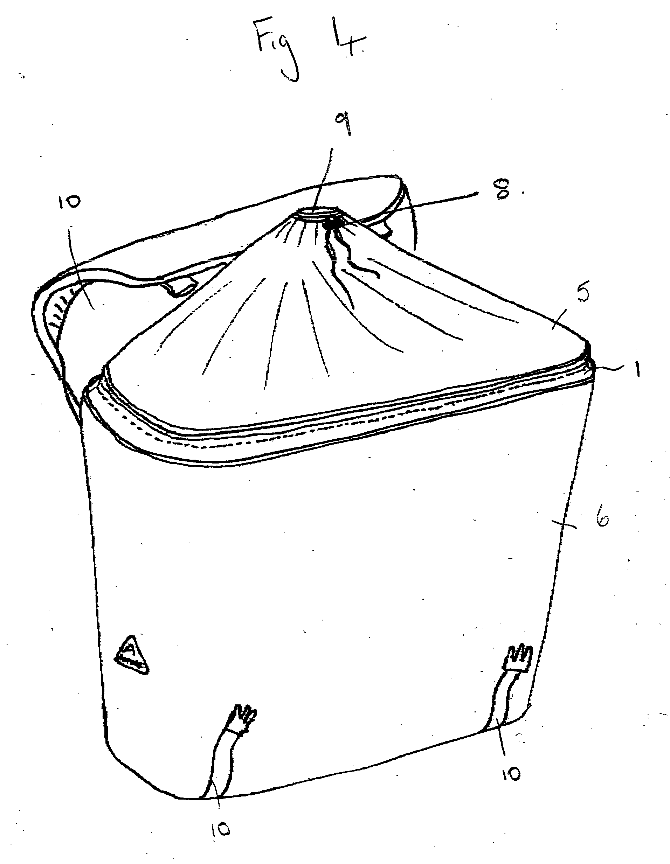

Fig 2: In the second step of the assembly process the bridging element mounting panel 2 is stitched to the inner pouch 5. The inner pouch is substantially oval in shape and is manufactured from for example a polyester coated with polyurethane. The bridging element mounting panel 2 is stitched circumferentially around the outer surface of the side walls of the pouch, with stitch line 3b and 3c extending along the length of the upper edge and lower edge of the bridging element mounting panel 2, respectively. A section of waterproof tape 4b and 4c is placed over stitch line which is exposed on the side of the panel to which the bridging element is attached.
Fig 3: The assembly described in Fig 3 above is attached to the outer casing 6 via the free end of the bridging element 1 by two stitch lines 7a and 7b.
Fig 4: The pannier bag is shown with the one of the longitudinal edges of the flexible strip waterproof material that comprises the bridging element 1 being attached, by a stitched seam, to the inner surface of the upper peripheral edge of the outer casing 6. The bridging element extends around the entire peripheral edge of the outer casing. The opposing longitudinal edge of the bridging element is attached to the outer surface of flexible inner pouch 5, such that approximately one quarter of the height of the inner pouch extends above the bridging element. The aperture of the inner pouch is closed by a drawstring 8 which is circumferentially integrated within the fabric at a position around the aperture 9 that allows access into the inner pouch. The outer casing 6 is provided with a flap 10 which extends out from the rear wall and which can be positioned over the inner pouch and attached to the front wall of the outer casing, thereby closing the outer casing and providing a second closure mechanism for the inner pouch 5. The flap 10 and outer surface of the outer casing 6 are provided with means to ensure the secure fastening of the flap to the outer casing, for example, clasps, buckles or Velcro.

## Claims

1. A waterproof bag comprising an outer casing and an inner pouch wherein the casing and pouch are interconnected by a bridging element.

2. A waterproof bag according to Claim 1 wherein the bridging element extends around at least a portion of the inner circumference of the casing and corresponding portion of the outer circumference of the pouch.

3. A waterproof bag according to Claim 2, wherein the bridging element extends around at least a half of the inner circumference of the casing and corresponding portion of the outer circumference of the pouch.

4. A waterproof bag according to Claim 2 or 3, wherein the bridging element extends completely around the inner circumference of the casing and corresponding portion of the outer circumference of the pouch.

5. A waterproof bag according to any of Claims 1 to 4, wherein the bridging element is elongate.

6. A waterproof bag according to any of Claims 1 to 5 wherein the bridging element is manufactured from a flexible material.

7. A waterproof bag according to any of Claims 1 to 6 wherein the bridging member is attached to the casing and pouch by means of a seam.

8. A waterproof bag according to Claim 7, wherein the seam is a stitched seam.

9. A waterproof bag according to Claim 7, wherein the seam is a welded seam.

10. A waterproof bag according to Claim 9, wherein the seam is produced by ultrasonic welding.

11. A waterproof bag according to Claims 7 to 10 wherein the seam is overlain with a waterproof layer.

12. A waterproof bag according to Claim 11, wherein the waterproof layer is a waterproof tape.

13. A waterproof bag according to any of Claims 1 to 12, wherein the bridging element is shaped so as to provide a channel in which water can collect.

14. A waterproof bag according to Claim 13, wherein the bridging element is substantially V-shaped or U shaped.

15. A waterproof bag according to any of Claims 1 to 14, wherein the casing, pouch and bridging element are manufactured from a waterproof material.

16. A waterproof bag according to Claim 15, wherein the waterproof material is selected from the group consisting of; nylon, neoprene, poly(vinylchloride) or polyester.

17. A waterproof bag according to any of Claims 1 to 16, wherein the waterproof bag is selected from the group consisting of; a pannier bag, a rucksack, a briefcase, a case for a laptop computer.

18. A method of manufacturing a waterproof bag comprising the step of interconnecting an outer casing to an inner pouch using a bridging element.

19. A method according to Claim 18, wherein the bridging element is an elongate member.

20. A method according to Claims 18 or 19, wherein the bridging element is manufactured of a flexible fabric.

21. A method according to any of Claims 18 to 20, wherein the method comprises the steps of;
i) attaching a portion of a bridging element to the pouch, and
ii) attaching an opposing portion of the bridging element to the casing.

22. A method according to any of Claims 18 to 21, wherein the bridging element extends around at least a portion of the inner circumference of the casing and corresponding portion of the outer circumference of the pouch.

23. A method according to Claim 22, wherein the bridging element extends around at least a half of the inner circumference of the casing and corresponding portion of the outer circumference of the pouch.

24. A method according to Claim 22, wherein the bridging element extends completely around the inner circumference of the casing and corresponding portion of the outer circumference of the pouch.

25. A method according to any of Claims 18 to 24, wherein the means of attachment is a stitched seam.

26. A method according to any of Claims 18 to 24, wherein the means of attachment is a welded seam.

27. A waterproof bag or method as described herein with reference to the example.

28. A waterproof bag according to Claim 1 or a method according to Claim 18 substantially as herein described.
